# EUROPEAN PATENT APPLICATION

(11) **EP 1 898 351 A1**
(43) Date of publication of application: **12.03.2008**
(21) Application number: 06757263.6
(22) Date of filing: 12.06.2006
(51) Int. Cl.: G06Q 30/00, G06F 13/00, G06K 17/00, G09F 19/00

(54) **ELECTRONIC ADVERTISEMENT SYSTEM AND ITS DISPLAY CONTROL METHOD**

(30) Priority: 23.06.2005 JP 2005183953
(71) Applicant: Sony Corporation, Minato-ku Tokyo (JP)
(72) Inventor: HATTORI, Yasuyuki c/o SONY CORPORATION, Shinagawa-ku Tokyo 1410001 (JP); MAEKAWA, Takuji c/o SONY CORPORATION, Shinagawa-ku Tokyo 1410001 (JP)
(74) Representative: Körber, Martin Hans
(86) International application number: PCT/JP2006/311778
(87) International publication number: WO 2006/137284

(57) **Abstract**

Disclosed is an electronic advertisement system in which display based on edited advertisement data distributed from a distribution server (20) is made in synchronism on a large-format display (312) and a sub-display (322), by a set top box (301B), user data stored in an IC card (40) is read out by a reader/writer (304) provided for the sub-display (322), and in which display contents by the large-format display (312) and the sub-display (322) are changed based on the read-out user data. That is, advertisement display is made in a manner suited to a user, such as a consumer, based on the information stored in a memory carried about by the user.

## Description

### Technical Field

This invention relates to an electronic advertisement system, having the function of collecting the information on the owners' use hysteresis, using a memory, such as an IC card, and a display control method therefor.

The present application claims priority rights based on the Japanese Patent Application No.2005-183953 filed in Japan on June 23, 2005. This application is to be incorporated by reference in the present application.

### Background Art

In a railroad station, a square or a lobby visited by many people, display devices for advertisement and merchandizing are frequently installed. These display devices display advertisement data, prepared by e.g. an advertising agency, as moving pictures or as still images. The advertisement, displayed by the display device, is furnished uni-directionally to the viewer, so that, even if the viewer desires to learn details of certain goods, thus advertised, he or she is unable to learn them instantly. On the other hand, an advertiser is not in a position to confirm the effect of the advertisement which has been made with the use of the display device installed at a preset place. In particular, the advertiser is unable to grasp the effect of advertisement in relation with the preset place where the display device is installed.

Up to now, in the field of information providing services, providing the information over a network, such as the Internet or public networks, there are known a so-called pull-type information distribution system and a so-called push type information distribution system. The pull-type information distribution system is such a system in which a user accesses a server of a contents provider from a user terminal, such as a personal computer, to download the desired information, whereas the push type information distribution system is such a system in which the server subjectively provides the information to plural user terminals without waiting for accesses from the users.

There has been proposed an information processing system in which it is possible to learn the purchase hysteresis of goods by users, such as consumers, using an IC card or a portable terminal with a built-in memory carried about by the user. When the user purchases goods in a store, the IC card or the portable terminal, having a built-in memory that holds amount data as value data, subtracts an amount corresponding to the price of the purchased goods from the amount data, while recording purchase hysteresis data in a memory, with the aid of a reader/writer, by way of updating. See for example the Japanese Laying-Open Patent Publication 2001-160105.

There has also been proposed an electronic advertisement system in which coupons are issued at a terminal device of a store providing an advertisement and are recorded on an IC card. The information on the coupons used in a store is recorded in a management device and the advertisement fee is calculated in association with the use information. See for example the Japanese laying-Open Patent Publication 2002-298025.

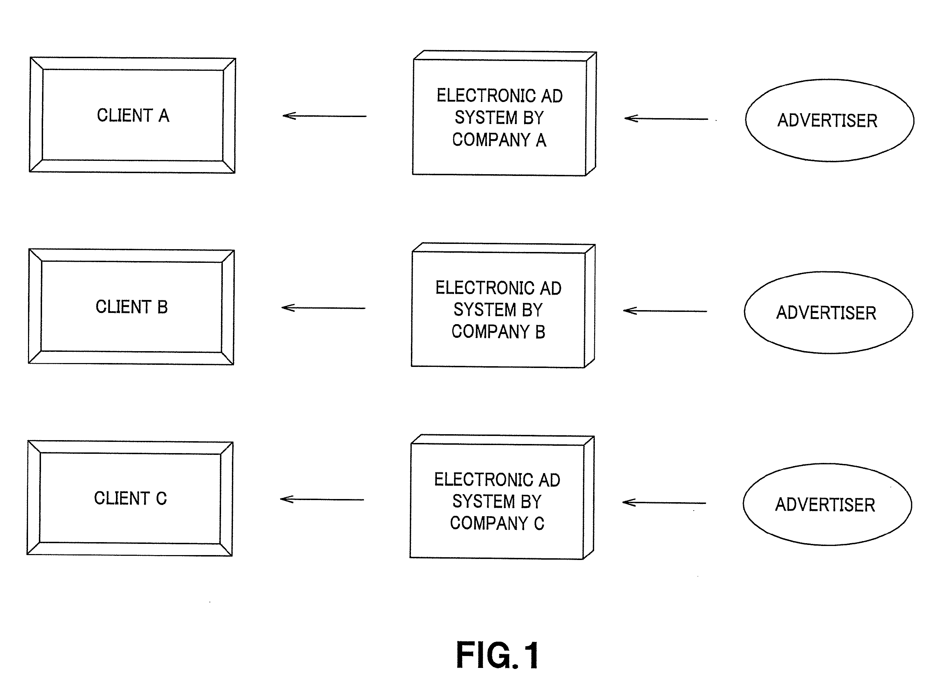

However, the advertisement contents were managed hitherto individually, from server to server, as shown for example in Fig. 1. In this figure, a system by a company A includes a server for distributing advertisement data for a superstore having plural unit stores, a system by a company B includes a server for distributing advertisement data for plural platforms of a railroad station, and a system by a company C includes a server for distributing advertisement data for distributing advertisement data for plural shopping malls. It has therefore been difficult to acquire a large sale volume and to make sufficient orders for advertisements.

### Disclosure of the Invention

### Problems to be solved by the Invention

In view of the above-described problems of the related art, it is an object of the present invention to provide an electronic advertisement system, in which display for advertisement suited for users, such as consumers, may be made based on the information stored in a memory carried about by each user, and a display control method therefor.

According to the present invention, there is provided an electronic advertisement system including editing means for editing a plurality of advertisement data to generate edited advertisement data for distribution, a distribution server having distribution means for distributing the edited advertisement data from the editing means over a network, a first display device for making display based on the edited advertisement data distributed from the distribution server and a second display device for making display based on the edited advertisement data in synchronization with the first display device. The second display device includes readout/write means to read out from and/or write in a memory having user data stored therein, and control means for exercising control to change display contents by the first display device based on the user data read out from the memory by the readout/write means.

According to the present invention, there is also provided a display control method in an electronic advertisement system in which display based on edited advertisement data distributed from a distribution server is made in synchronism on a first display device and a second display device, in which the method comprises reading out memory identification data by readout/write means, adapted to read out from or write in a memory having user data stored therein, from the memory, and exercising control to change display contents by the first display device based on the user data read out from the memory. The readout/write means is provided in the second display device;

According to the present invention, a one-to-one advertisement model may be implemented in an electronic advertisement system exploiting a large format display. With the one-to-one advertisement model, it is possible to read out contents of a memory, such as a non-contact IC card, by readout/write means, or to change the contents of advertisements displayed on a large format screen by a method for acting on and inputting on a sub-screen.

Other objects and advantages derived from the present invention will become more apparent from the following description which will now be made in conjunction with the accompanying drawings.

### Brief Description of the Drawings

Fig. 1 is a schematic view showing the constitution of a conventional electronic advertisement system.
Fig.2 is a schematic block diagram showing the constitution of an electronic advertisement system embodying the present invention.
Fig.3 is a schematic block diagram showing an illustrative constitution of a terminal device, supervised by a client, in the electronic advertisement system.
Fig. 4 is a schematic block diagram showing an illustrative constitution of a terminal device in a shopping mall, supervised by a client, in the electronic advertisement system.
Fig.5 is a schematic block diagram showing a one-to-one advertisement model constructed in the electronic advertisement system.
Fig.6 is a schematic block diagram showing an example of connection for a distribution server, a large-format display device and a sub-display device in case of constructing a one-to-one advertisement model in the electronic advertisement system.
Fig.7 is a schematic block diagram showing an illustrative constitution of a terminal device of a shopping mall supervised by a client, in the electronic advertisement system.
Fig.8 is a schematic block diagram showing a data processing system according to the present invention.
Fig.9 is a schematic view showing the constitution of edited advertisement data.
Fig.10 is a schematic block diagram of a display terminal device installed in a hotel.
Fig.11A shows a recording domain of a first IC card exclusively used for electronic money and Fig.11B shows recording domains of a second multi-purpose IC card, such as a hotel membership card.
Fig.12 is a schematic view showing data supplied to a hysteresis management device.
Fig.13A shows memory identification data MID, first hysteresis data HD1, membership identification data MD and second hysteresis data HD2, from a first reader/writer of a display terminal device, installed in a hotel, Fig. 13B shows memory identification data MID and first hysteresis data HD1 from a second reader/writer of a store terminal device installed in a store A handling IC cards, and Fig. 13C shows analysis data generated from Figs. 13A and 13B.
Fig.14 is a flowchart for illustrating a sequence of operations as from the generation of edited advertisement data until distribution thereof to a display terminal device.
Fig.15 shows the state of demonstration of the edited advertisement data on a display operation part of a display terminal device.
Fig. 16 is a flowchart for illustrating the sequence of processing operations in case a user has acted on the display terminal device.
Fig. 17 shows the state in which a page for communication with an IC card is demonstrated on the display operation part of the display terminal device.
Fig. 18 is a flowchart for illustrating the sequence of processing operations in case of acquisition of coupon data.
Fig.19 is a flowchart for illustrating the sequence of processing operations when a user purchases goods.
Fig.20 is a flowchart for illustrating the sequence of processing operations until generation of analysis data by the hysteresis analysis device.

### Best Mode for Carrying out the Invention

The electronic advertisement system according to the present invention will now be described in detail with reference to the drawings. It is noted that the present invention is not limited to the particular embodiments now described and may optionally be modified without departing from the purport of the invention.

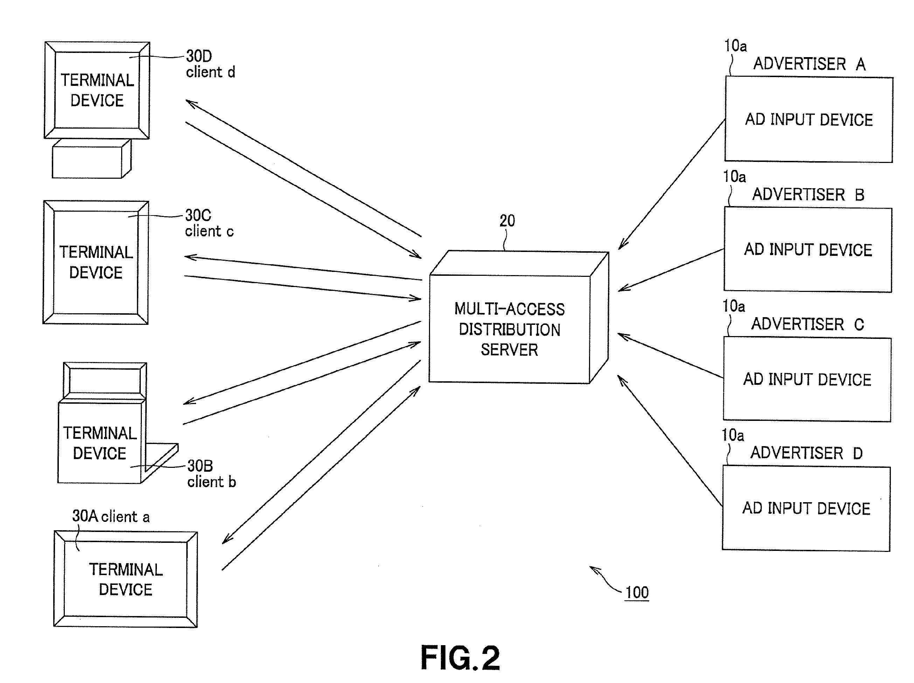

The present invention is applied to an electronic advertisement system 100 shown for example in Fig.2.

The present electronic advertisement system 100 includes advertisement inputting devices 10a to 10d, supervised by advertisers A, B, C, ..., a multi-access distribution server 20, supervised by a system supervisor S, and terminal devices 30A to 30D, supervised by clients a, b, c, d, ···. The multi-access distribution server 20 monistically supervises advertisement data from these devices and servers.

In this electronic advertisement system 100, the terminal device 30A is installed in a hotel, supervised by the client a, for instance. The terminals devices 30B and 30C are installed in a shopping mall, supervised by the client b, and in a railroad station, supervised by the client c, respectively, for instance. The terminal device 30D is installed in a shopping mall, supervised by the client d, for instance.

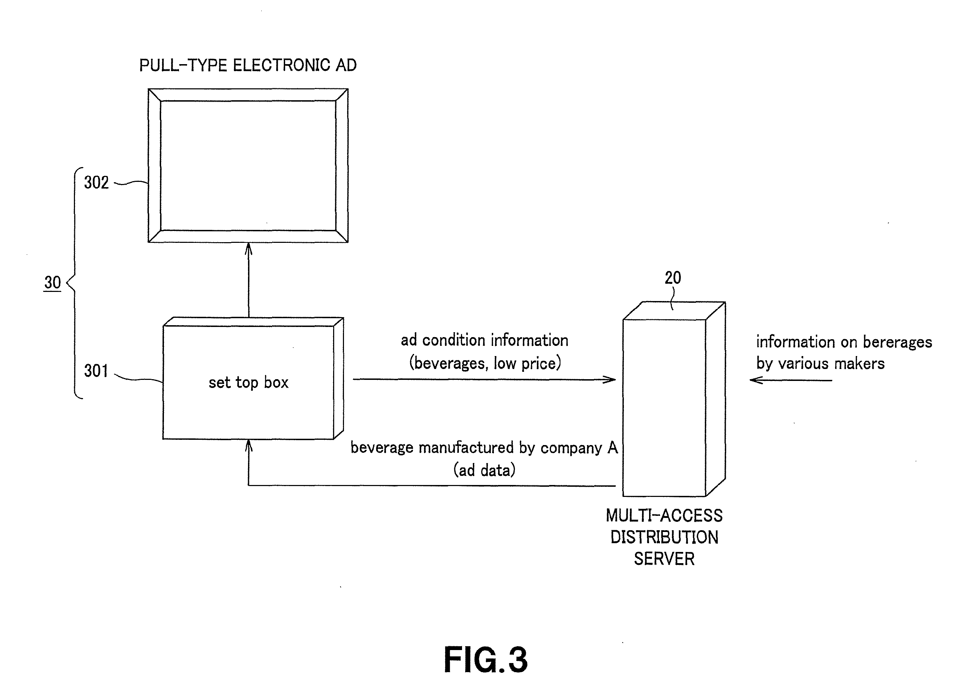

The terminal device 30, supervised by the client, is made up of a set top box 301, receiving advertisement data from the multi-access distribution server 20, and a display device 302, connected to the set top box 301, as shown for example in Fig.3. The terminal device demonstrates advertisements on the display device 302 based on the advertisement data received by the set top box 301.

When sending advertisement data to the distribution server 20 via the advertisement inputting device 10a to 10d, in this electronic advertisement system 100, the advertisers A, B, C, ··· send the information on the advertisement providing conditions, including the client types, territories, time or time periods for advertisement data distribution, to the distribution server 20, along with the advertisement data.

The set top box 301, connected to the client-side display device 302, sends the information on the conditions for the advertisements, desired to be demonstrated on the user side display device 302, such as advertisements for low-price beverages, to the distribution server 20. The set top box automatically acquires only advertisement data suited to the condition information requested, such as advertisement data of beverages manufactured by a maker A, from the distribution server 20, to display the so acquired advertisement data on the display device 30.

That is, the distribution server 20 performs the processing of matching the information on the advertisement providing conditions on the advertiser side to the information on the conditions on the advertisements, desired to be demonstrated on the client side, and selectively distributes advertisement data suited to the respective requests.

Hence, the pull type distribution system, in which the user may automatically get the advertisements distributed, may be provided, so that the user may be relieved of the labor of collecting the advertisements he or she may desire to be displayed. Moreover, the large-scale advertisement system that could not be implemented with a single system, may be provided for the advertisers.

Moreover, in this electronic advertisement system 100, plural display devices are connected to the client side set top box 301, and advertisement demonstration may be made in these display devices either independently of or in synchronization with one another.

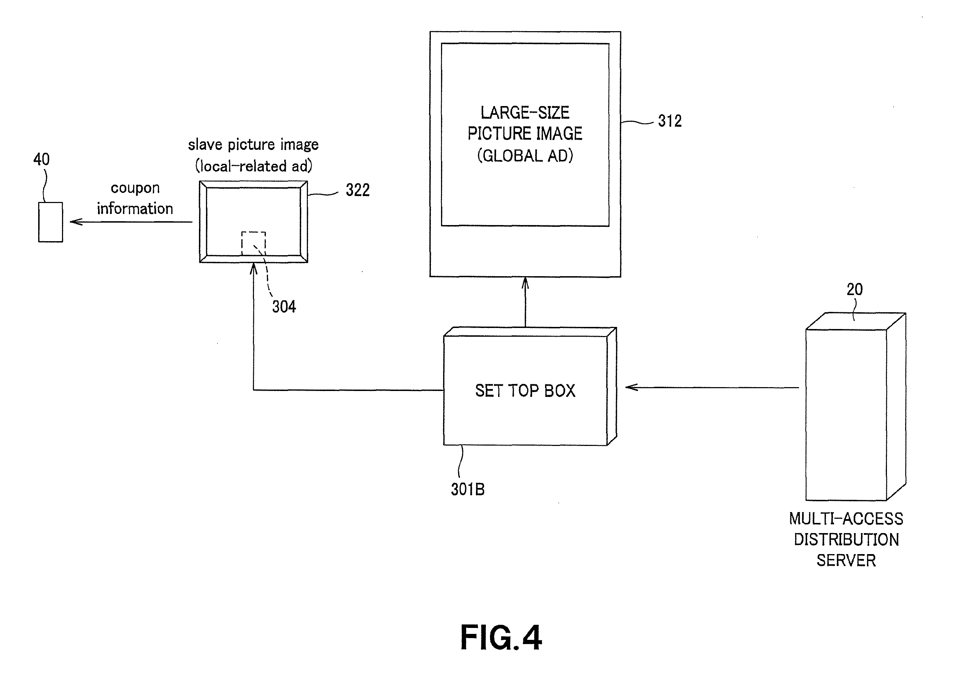

For example, in the terminal device 30B in the shopping mall, supervised by the client b, a small-size sub-display 322, having a built-in reader/ writer 304 for a non-contact IC card 40, is installed ahead of a large format display 312, as shown in Fig.4. The small-size sub-display 322 and the large format display 312 are designed to perform advertisement demonstration in synchronization with each other.

Specifically, the large format display 312 demonstrates e.g. an advertisement for motion pictures by way of global advertisement, whereas the small-size sub-display 322 demonstrates the information on a film shown in a near-by motion picture theater, as local related advertisement for the global advertisement demonstrated on the large format display 312. Further, the small-size sub-display 322 demonstrates that a discount coupon for the motion picture, as the service information, may be written in the IC card 40.

The user of the non-contact IC card 40 may confirm on the sub-display 322 the detailed information or the coupon information, matched to the advertisement contents of the moving pictures and the still images, demonstrated on the large format display 312. In addition, the user of the non-contact IC card may acquire the information or the coupons, on touching with the non-contact IC card 40, or apply for a campaign.

Conversely, the advertisement concerning the contents retrieved on the sub-display 322 may be demonstrated on a large-sized screen of the large format display 312.

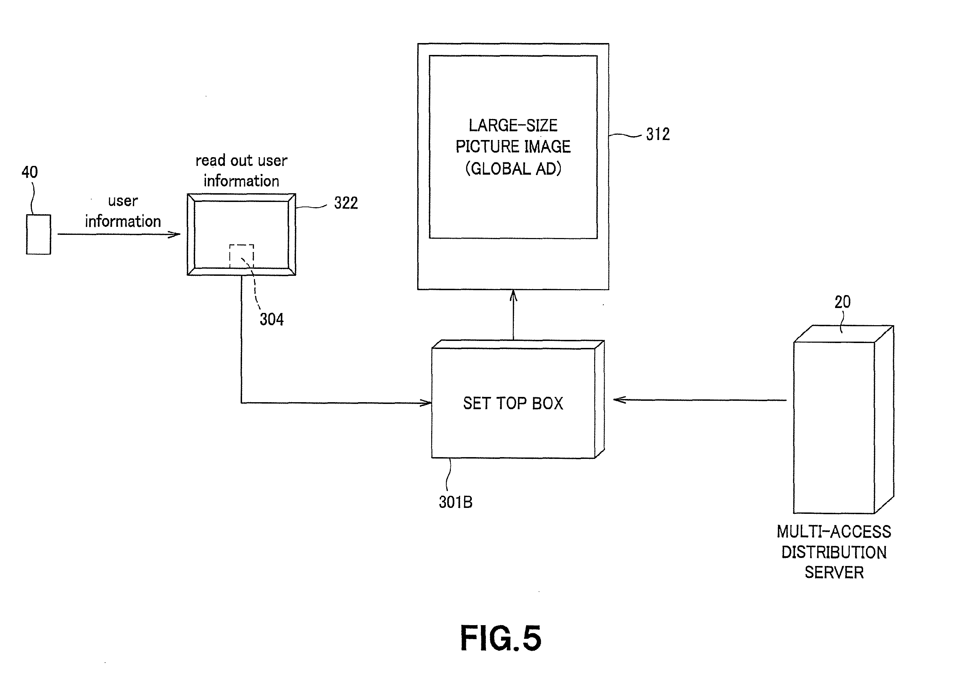

In addition, a one-to-one advertisement model, in which the contents of the non-contact IC card 40 may be read on the reader/ writer 304 or the advertisement contents demonstrated on the large-sized screen of the large format display 312 may be modified by acting on the screen of the sub-display 322, may be implemented, as shown in Fig. 5.

For example, a set top box 301B, connected to the large format display 312 and to the small-size sub-display 322, has advertisement data of plural patterns distributed in advance from the distribution server 20. The set top box 301B performs matching the information read out by the reader/ writer 304 from the non-contact IC card 40 to the information stored in the set top box, to select which pattern as data is to be displayed, and sends the so selected advertisement data to the large format display 312. The information read out by the reader/ writer 304 from the non-contact IC card 40 may be enumerated by, for example, the information on the coupon data acquired and owned by the card owner, the periodic information, such as the information on the passengers getting on board or alighting from vehicles or cars, and the private information allowed for disclosure.

In this manner, the advertisement demonstration, best suited to the users, may be made in association with the information read out by the reader/ writer 304. For example, if the user is an old man/ woman, based on the age information, as read out by the reader/writer 304, the text information may be displayed with a large-sized font. If the user is a repeater, based on the use hysteresis information, further detailed advertisement data may be demonstrated. If the user is a male, based on the sex information, an advertisement for male may be displayed.

The large format display 312 and the small-size sub-display 322 may be interconnected by e.g. LAN to correlate the information and to effect synchronized demonstration. A set-top box 301 B here is not used and, in its stead, the information read by the reader/writer 304 from the sub-display 322 is transmitted to the large format display 312 via the LAN to modify the contents of demonstration on the large format display 312.

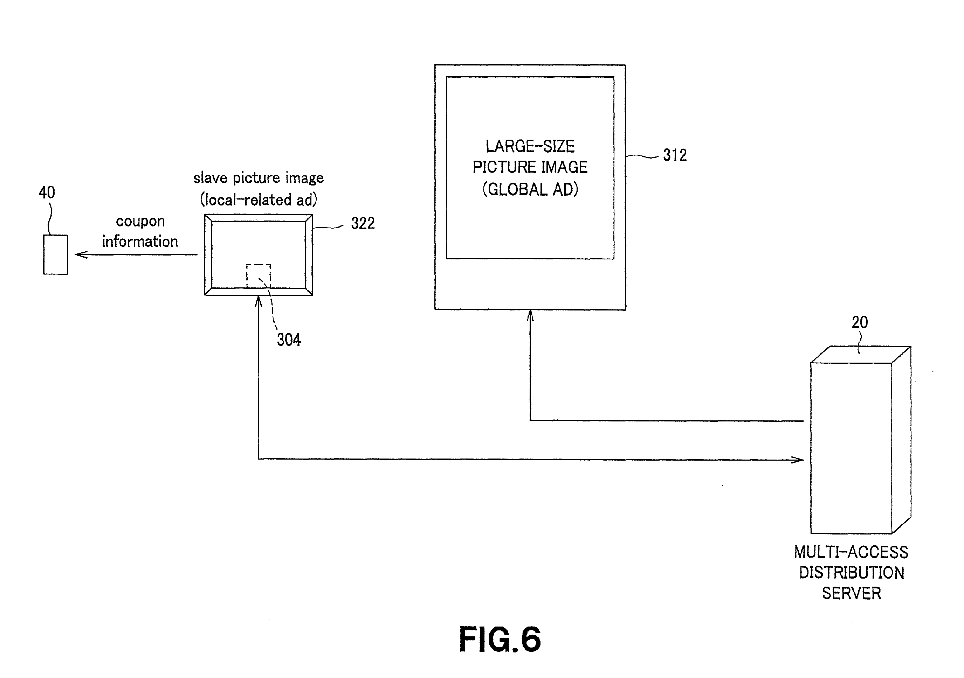

It is also possible for the distribution server 20 to supervise the large format display 312 and the small-size sub-display 322 to effect the synchronized demonstration in real-time, as shown in Fig.6. That is, the sub-display 322 may transmit the information read out by the reader/ writer 304 to the distribution server 20, which distribution server 20 may then exercise control to modify the display contents on the large format display 312.

Meanwhile, the small-size sub-display 322, having enclosed therein the reader/writer 304 for the non-contact IC card 40, is provided as a dedicated display device for the present electronic advertisement system 100.

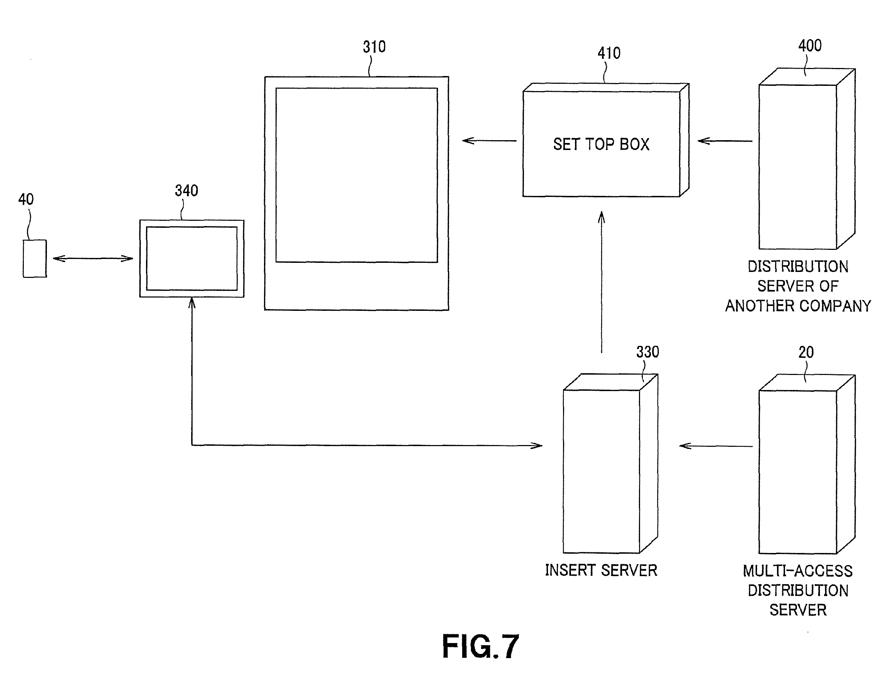

The terminal device 30D, supervised by e.g. the client d, is made up of a display 310, associated with another electronic advertisement system, and which is supplied with advertisement data from a pre-existing distribution server 400 via a set top box 410, a reader/ writer 340 for the non-contact IC card 40, and an insert server 330, as shown in Fig.7. The display 310 does not have the function to read out from or write in the non-contact IC card. The insert server 330 separates edited advertisement data, supplied from the distribution server 20, from other service data, and effects format conversion of the edited advertisement data into meeting with the display configuration for the display 310. The insert server 330 then transmits the format-converted advertisement data to the display 310 in keeping with the display schedule on the display 310, while transmitting other service data to the reader/writer 340.

Thus, with the electronic advertisement system 100, including the insert server 330 for separating the edited advertisement data, supplied from the distribution server 20, from the other service data, to send the edited advertisement data to the display 310, and for supplying the other service data to the reader/ writer 340 of the non-contact IC card 40, the advertisement data may monistically be managed by the distribution server 20, in such a manner that the other service data, including the coupon data, may be distributed, along with the advertisement data, to the display devices.

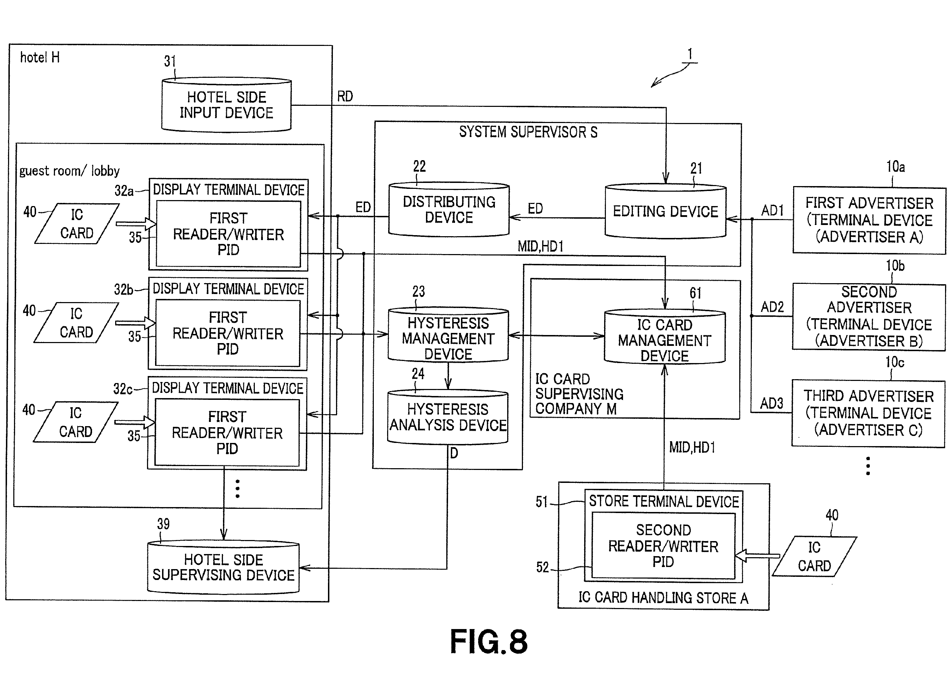

The processing for analysis and management of the information on the behavior hysteresis of the user of the non-contact IC card 40 in this electronic advertisement system 100 will now be described with reference to Figs.8 to 20. The case of acquiring the information on the behavior analysis of the user by display terminal devices 32a to 32c, installed in the hotel H, as a terminal device 30A supervised by the client a, and by a store terminal device 51 installed in the neighborhood of the hotel H, is taken as an example for explanation.

The advertiser A is a leading advertisement agency company, for instance. A first advertisement inputting device 10a generates first advertisement data AD 1 for a specified business corporation and/or for specified goods. As the conditions for distributing the advertisement data, the advertiser A inputs the display time, such as 15 or 30 seconds, time zones, number of times of looping and display time intervals, to the first advertisement inputting device 10a.

The advertiser B is doing business in a preset territory and may, for example be a ticket dealer in less than 500m away from the hotel H. The advertiser B generates, by a second advertisement inputting device 10b, second advertisement data AD2, including advertisement data for a specified motion picture or coupon data.

The advertiser C is a restaurant in a preset territory within 500 m around the hotel H. The advertiser C generates, by a third advertisement inputting device 10c, third advertisement data AD3, including advertisement data or coupon data of a specified store.

The first to third advertisement inputting devices 10a to 10c each include a constitution similar to that of a usual computer. Thus, the first to third advertisement inputting devices each include a hard disc, a ROM (Read Only Memory), a RAM (Random Access Memory), a CPU (Central Processing Unit), a display device, such as LCD (Liquid Crystal Display) or a CRT (Cathode Ray Tube), an inputting device, such as a keyboard or a mouse, an input/output interface, referred to below simply as I/F, for an external storage device, such as optical disc, and a communication I/F for communication over a network, such as the Internet, for instance. The first to third advertisement inputting devices 10a to 10c respectively generate first to third advertisement data AD 1 to AD3 by an editing software item installed therein. These first to third advertisement data are constituted by moving picture data, still image data, speech data and text data, for instance.

The number of the advertisers or that of the advertisement inputting devices is not limited to that described above.

Referring to Fig. 8, the multi-access distribution server 20 in this electronic advertisement system 100 includes an editing device 21, a distributing device 22, a hysteresis management device 23 and a hysteresis analysis device 24, for instance. The editing device 21 edits the first to third advertisement data AD 1 to AD3, supplied from the first to third advertisement inputting devices 10a to 10c of the first to third advertisers A to C. The distributing device 22 distributes the edited advertisement data, and the hysteresis management device 23 supervises the hysteresis of the IC card 40. The hysteresis analysis device 24 supervises the hysteresis of the IC card 40.

The editing device 21 has a constitution similar to that of a usual computer. Thus, the editing device includes a hard disc, a ROM, a RAM, a CPU, a display device, such as LCD or CRT, an inputting device, such as a keyboard or a mouse, an input/output I/F for an external storage device, such as optical disc, and a communication I/F for communication over a network, such as the Internet, for instance.

The editing device 21 receives the first to third advertisement data AD 1 to AD3, supplied from the first to third advertisement inputting devices 10a to 10c, via the communication I/F or the input/output I/F, and executes the function of the editing software installed. By so doing, the editing device edits the first to third advertisement data AD 1 to AD3, as input, to generate edited advertisement data ED made up of moving pictures, still image data, speech data or text data.

Meanwhile, the first to third advertisement data AD1 to AD3 are entered from the first to third advertisement inputting devices 10a to 10c over a network, such as WAN (Wide Area Network), the advertisement inputting devices are attached to over a public network. Hence, the first to third advertisement data AD1 to AD3 may be input after the advertisement data are encrypted using the SSL (Secure Sockets layer), for instance.

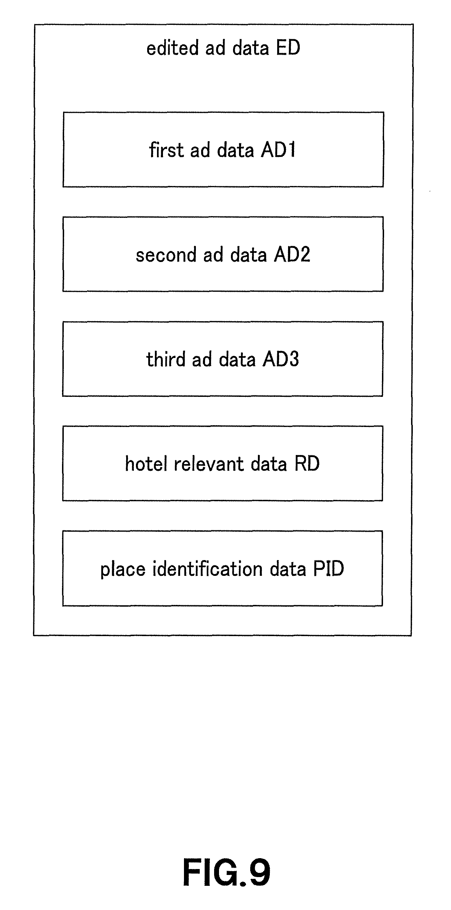

The edited advertisement data ED, thus generated, include the first advertisement data AD1, generated by the first advertisement inputting device 10a, second advertisement data AD2, generated by the second advertisement inputting device 10b, and third advertisement data AD3, generated by the third advertisement inputting device 10c, as shown in Fig.9. The edited advertisement data ED has been edited in such a manner that the first to third advertisement data AD 1 to AD3 are demonstrated in three separate areas on the display screen or in such a manner that one or more advertisement data are demonstrated superimposed on other advertisement data. Also, the advertisement data AD1 to AD3 are of a layered or hierarchical structure, in such a manner that, when one advertisement data is selected, detailed sub-layer advertisement data are further displayed.

Meanwhile, the edited advertisement data ED includes place identification data PID, entered by the system supervisor S using the editing device 21. Here, the data PID is data specifying the place of the hotel H. The edited advertisement data ED also includes advertisement sites supplied by a hotel side inputting device 31, as later described, herein relevant data RD provided by the hotel H.

The above-described edited advertisement data ED, generated by the editing device 21, are transmitted over a wired or wireless network or via a portable recording medium, such as an optical disc, to the distributing device 22. These data, transmitted over the network, may also be encrypted, using the aforementioned SSL, for instance.

The distributing device 22 has a constitution similar to that of a usual server device. Thus, the editing device includes a hard disc, a ROM, a RAM, a CPU, a an input/output IF for an external storage device, such as optical disc, and a communication I/F for communication over a network, such as the Internet, for instance. The distributing device 22 distributes the edited advertisement data ED, generated by the editing device 21, to the hotel H, over a network, such as the Internet, in accordance with preset conditions, such as specified date and time for distribution.

The distributing device 22 supervises the place identification data PID, allocated to the display terminal devices 32a to 32c, by a database provided on a hard disc, in association with network address data for the display terminal devices 32a to 32c. These display terminal devices 32a to 32c, as later described, operate as destination of distribution of the edited advertisement data ED. The distributing device 22 distributes the edited advertisement data ED to the display terminal devices 32a to 32c for which are allocated the same place identification data PID as the place identification data PID included in the edited advertisement data ED.

The hysteresis management device 23 has a constitution similar to that of a usual computer. Thus, the editing device includes a hard disc, a ROM, a RAM, a CPU, a display device, such as LCD or CRT, an inputting device, such as a keyboard or a mouse, an input/output I/F for an external storage device, such as optical disc, and a communication I/F for communication over a network, such as the Internet, for instance.

The hysteresis management device 23 receives, over a network, the hysteresis information when the reader/writers of the display terminal devices of the terminal devices 30A to 30D, supervised by the clients a, b, c, d ···, have accessed the IC cards, and supervises the data of the hysteresis information, in a correlated manner, in a database provided in a hard disc, for instance.

The hysteresis analysis device 24 has a constitution similar to that of a usual computer. Thus, the editing device includes a hard disc, a ROM, a RAM, a CPU, a display device, such as LCD or CRT, an inputting device, such as a keyboard or a mouse, an input/output I/F for an external storage device, such as optical disc, and a communication I/F for communication over a network, such as the Internet, for instance. The hysteresis analysis device 24 extracts hysteresis data, associated with memory identification data MID, supervised by an IC card management device 61, which hysteresis data coincide with the memory identification data MID acquired by the display terminal devices provided in the terminal devices 30A to 30D supervised by the clients a, b, c, d ···.

In the present electronic advertisement system 100, the terminal device 30A is installed in a hotel supervised by the client a, for instance, and the terminal device 30B is installed in a shopping mall supervised by the client b, for instance. The terminal device 30C is installed in a railroad station supervised by the client c, for instance, and the terminal device 30D is installed in a shopping mall supervised by the client d, for instance.

The terminal device 30A, supervised by the client a, includes the hotel side inputting device 31, and the display terminal devices 32a to 32c. The hotel side inputting device 31 generates hotel relevant data RD, to be included in the edited advertisement data ED, for instance, and sends the so generated data to the editing device 21 supervised by the system supervisor S. The display terminal devices 32a to 32c are provided in a public space, such as lobby or in each guest room of the hotel H.

The hotel side inputting device 31 has a constitution similar to that of a usual computer. Thus, the editing device includes a hard disc, a ROM, a RAM, a CPU, a display device, such as LCD or CRT, an inputting device, such as a keyboard or a mouse, an input/output I/F for an external storage device, such as optical disc, and a communication I/F for communication over a network, such as the Internet, for instance.

The hotel H generates, in the hotel side inputting device 31, the weather information, the information on neighboring facilities, the information on the operating states of means for transportation, the information on utensils provided in the guest rooms, or the information on the promotion of sample products, by way of the hotel relevant data RD provided for users, such as guests. The hotel provides the so generated information to the editing device 21, managed by the system supervisor S, over a network or via the portable recording medium. The hotel relevant data RD are included in the edited advertisement data ED in the editing step of the editing device 21.

The edited advertisement data ED, distributed from the distributing device 22, is distributed by a public network, via a network, the system supervisor attaches to, such as WAN. The edited advertisement data ED may be securely distributed to the display terminal devices 32a to 32c, using the SSL, for instance.

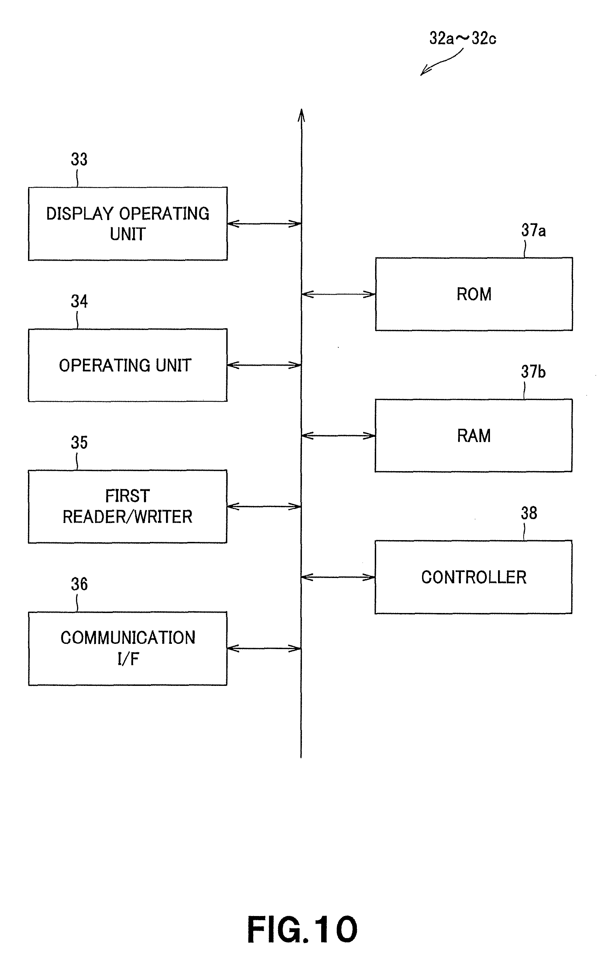

Referring to Fig.10, the display terminal devices 32a to 32c are each provided with a display operating unit 33, constituted by a touch panel, 8 to 12 inches in size, for instance, and an operating unit 34, constituted by a cross-key or a plural number of pushbuttons, for instance. Each display terminal device is also provided with a first reader/writer 35 for reading out from or writing in the IC card 40, owned by the user, and a communication I/F 36 used for communication with the distributing device 22. Each display terminal device is also provided with a ROM 37A having stored a control program, for instance, a RAM 37b, loadable with a program, for instance, and a controller 38 for carrying out processing based on the control program.

The place identification data PID for identifying the place of installation is allocated to each of the display terminal devices 32a to 32c, and is stored in storage means, such as ROM 37a. The place identification data PID, allocated to each of the display terminal devices 32a to 32c, is not the identification data allocated to the respective display terminal devices 32a to 32c in the hotel H, but is the identification data common to all of the display terminal devices 32a to 32c in the hotel H, for instance. That is, the place identification data PID is the identification data for globally identifying the places of installation of the display terminal devices 32a to 32c or specifying the advertisement sites.

Meanwhile, identification data for specified installation sites in the hotel H, such as its guest rooms or lobby, may be appended to the place identification data PID, using branch numbers, for instance. In this case, a hotel side server, operating as a proxy server for relaying the edited advertisement data ED, is provided between the distributing device 22 and the display terminal device 32, and is supplied with the place identification data PID. The branch numbers are accorded to the display terminal device 32, connected to the hotel side server via LAN (Local Area network) made secure with SSL, for instance. The hotel side server may be supplied with the hotel relevant data RD which are in meeting with the users staying in preset guest rooms. Hence, the hotel relevant data RD may be distributed from the hotel side server to the display terminal device 32, without these data being supplied to the editing device 21. Moreover, the edited advertisement data ED may be provided in the hotel side server, thus relieving the load otherwise imposed to the distributing device 22.

The first reader/writer 35 communicates with the IC card 40 via short-distance or near-distance wireless communication, such as RFID (Radio Frequency Identification System) or NFC (Near Field Communication), and has an antenna coil on a display operating unit 33. Here, the RFID is taken as an example for explanation. When providing the antenna coil of the first reader/writer 35 on the display operating unit 33, the antenna coil is to be transparent so as not to obstruct viewing the display screen.

It is noted that the display operating unit 33 may be provided only with the display function. The first reader/writer 35 may also be provided in the vicinity of the display operating unit 33 or on the back side of an enclosure. The first reader/writer 35 may also be connected with the display terminal device 32 or with the display terminal devices 32a to 32c via wired or wireless path.

On the display operating unit 33 of each of the display terminal devices 32a to 32c are demonstrated the edited as data distributed. One of plural advertisement data displayed may be selected by acting on the display operating unit 33 or on the operating unit 34 to display the detailed advertisement data of the lower layer on the display operating unit 33. Moreover, with the present display terminal devices 32a to 32c, the coupon data CD, included in the advertisement data of the edited advertisement data, may be downloaded, or the goods advertised by the advertisement data AD 1 to AD3 may be purchased by placing the IC card 40 in proximity to the antenna coil of the first reader/writer 35. In case the antenna coil is provided on the display operating unit 33, a message reading: 'Please put the IC card over this place' of the edited advertisement data ED appears on a portion of a screen for downloading the coupon data CD or a screen for purchasing the goods which is provided with an antenna coil. When the IC card has been used, the display terminal devices 32a to 32c generate access log data to save the data in a hard disc or in a semiconductor memory. For example, the display terminal devices 32a to 32c save log data such as address data or date/time data of the page accessed of the edited advertisement data ED, or date/time data of access of the IC card 40.

Meanwhile, the sites of installation of the display terminal devices 32a to 32c are first places in the hotel H where the IC card 40 is a used or where advertisements are made.

The number of the display terminal devices 32a to 32c, installed in the hotel H, is not limited to that in the above embodiment.

In the terminal device 30B, supervised by the client b, a large format display with a large display surface and a small-sized sub-display with a built-in reader/writer for the non-contact IC card may be provided as a set, as the display terminal device 32a provided in a lobby of the hotel H, for instance. In this case, synchronized advertisement display may be made on the large-sized display and on the small-sized display, as in the case of the terminal device 30B in the shopping mall supervised by the client b.

The antenna coil of the IC card 40, owned by the user, is magnetically coupled, by magnetic induction, with the antenna coil of the reader/writer, in accordance with the RFID, so that non-contact data communication takes place between the IC card and the reader/writer. This IC card 40 includes a memory device in its inside and, in the memory device, there is stored amount data, as value data, in association with the identification data in the memory device.

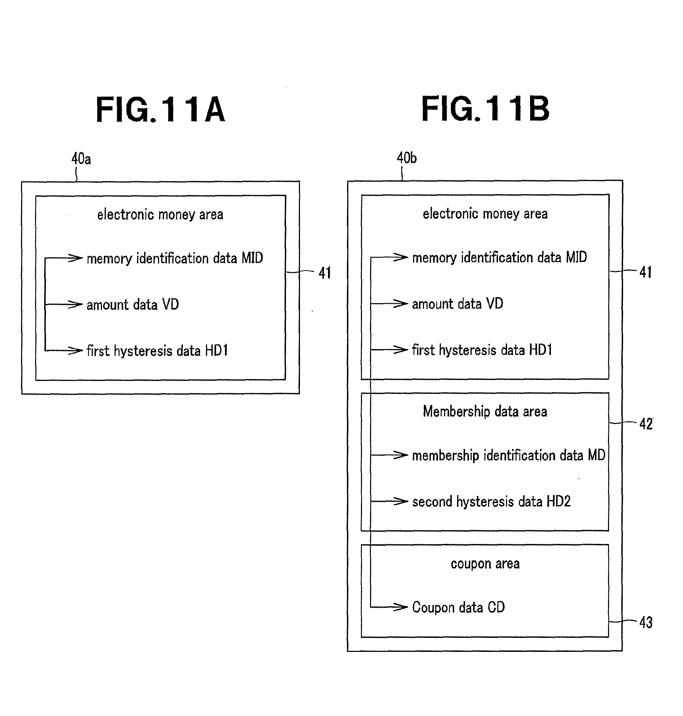

The IC card 40 is of two types, namely a first IC card 40a and a second IC card 40b. The first IC card 40a includes an electronic money area 41 in its memory element, as shown in Fig.11A. In this electronic money area 41, there are stored memory identification data MID, amount data VD, as money value data, and first hysteresis data HD1. The first hysteresis data HD 1 includes time/date data when the amount has been changed due to money received or money disbursed, identification data of the reader/writers, identification data for stores where the reader/writers are installed, identification data for goods purchased, and time/date data of accessing the reader/writers. The value data VD and the first hysteresis data HD 1 are correlated with the memory identification data MID.

The second IC card 40b is the same as the first IC card 40a except that a further functions are added to the first IC card. Here, the second IC card is a card that may be used as membership card for the hotel H, for instance. The second IC card 40b includes a membership data area 42 and a coupon area 43 in addition to the aforementioned electronic money area 41, as shown in Fig.11B. In the membership data area 42 are stored membership identification data MD and second hysteresis data HD2. The membership identification data MD includes membership numbers, ranks, names, telephone numbers, addresses and email addresses of the customers. The second hysteresis data HD2 includes use hysteresis data, such as data on when the hotel H was used and, if the hotel H is a hotel of a hotel chain, which hotel was used, along with logs when the display terminal devices 32a to 32c were used. In the coupon area 43 are stored coupon data CD downloaded from the display terminal devices 32a to 32c. The membership identification data MD, second hysteresis data HD2 and the coupon data CD are correlated with the memory identification data MID.

The first IC card 40a and the second IC card 40b are sometimes collectively referred to as an IC card 40. As for the sorts of the IC card 40, there may be an IC card having other functions, such as the functions of a credit card or a debit card, in addition to the first IC card 40a and the second IC card 40b. In place of the IC card 40, a mobile information processing terminal device, such as a mobile phone or an electronic memo, having built-in components, implementing the functions of the IC card 40, may be used, provided that the device so used is mobile and may be carried about by the user.

When communicating with the first IC card 40a, the first reader/writer 35 of the display terminal device 32a, 32b or 32c at least reads out the memory identification data MID from the electronic money area 41. That is, when the user has browsed the edited advertisement data ED, using the display terminal device 32a, 32b or 32c, the first reader/writer 35 reads out the memory identification data MID from the electronic money area 41 of the first IC card 40a. On the other hand, when the user has browsed the edited advertisement data ED, using the display terminal device 32a, 32b or 32c, and has purchased the goods advertised, the first reader/writer 35 reads out the memory identification data MID from the electronic money area 41 of the first IC card 40a, at the same time as it subtracts an amount equivalent to the price of the goods from the value data VD to update the first hysteresis data HD1. The first reader/writer 35 of the display terminal device 32a, 32b or 32c is supervised by the hotel H, so that, when communicating with the second IC card 40b, the first reader/writer accesses the membership data area 42 as when communicating with the first IC card 40a. Thus, the first reader/writer reads out the membership identification data MD, in addition to reading out data from or writing data in the electronic money area 41 of the second IC card 40b, and updates the second hysteresis data HD2. In addition, the first reader/writer 35 writes the coupon data CD in the coupon area 43 when the user has browsed the edited advertisement data ED using the display terminal device 32a, 32b or 32c to download the coupon data CD.

Meanwhile, the store A handling the IC card 40 supervises the store terminal device 51, as shown in Fig. 8. The store A handling the IC card 40 may also become the advertiser B or the advertiser C and is a store located within the sphere of 500m around the hotel H and actually handling the goods advertised by the first advertisement data AD2 or the second advertisement data AD3. The store terminal device 51, supervised by the store A, handling the IC card 40, is a device a POS (Point-Of-Sale) terminal of which is connected over a wired or wireless path to a second reader/writer 52 of the IC card 40. The store terminal device 51 is also a device installed in a second place different from the place of installment of the display terminal device 32a, 32b or 32c. This second reader/writer 52 communicates with the IC card 40 in accordance with RFID. Unlike the antenna coil of the first reader/writer 35, the antenna coil of the second reader/writer 52 is not provided in the display unit and hence does not have to be transparent. When communicating with the first IC card 40a, that is, when making payment at the time of purchasing the goods, the second reader/writer 52 reads out the memory identification data MID from the electronic money area 41 of the first IC card 40a, at the same time as it subtracts an amount equivalent to the price of the goods from the value data to update the first hysteresis data HD 1. When communicating with the second IC card 40b to make payment at the time of purchasing the goods, the second reader/writer 52 reads out the memory identification data MID from the electronic money area 41 of the first IC card 40a, at the same time as it subtracts an amount equivalent to the price of the goods from the value data VD to update the first hysteresis data HD 1. If there is corresponding coupon data CD in the coupon area 43 of the second IC card 40b, the second reader/writer 52 causes the contents thereof to be reflected in the price, while wiping off the coupon data CD in the coupon area 43.

After a preset time period, the memory identification data MID of the IC card 40 is transmitted by an IC card supervising company M from the IC card management device 61 to the hysteresis management device 23 managed by the system supervisor S, and a report is made from the IC card supervising company M to the system supervisor S. The hysteresis management device 23 of the system supervisor S collates the memory identification data MID to the memory identification data MID of the IC card 40 to the memory identification data MID of the IC card 40, the coupon discount rate decided on by a preset advertiser, for example, the advertiser B, is to be applied to. By so doing, the hysteresis management device 23 proves that the coupon issued by the advertiser B has been acquired by the owner of the IC card 40 in the hotel H using the first reader/writer 35 in the display terminal device 32a, 32b or 32c in the hotel H. The hysteresis management device 23 sends the results to the management device 61 of the IC card supervising company M. Then, a report is sent from the system supervisor S to the IC card supervising company M. The IC card management device 61 of the IC card supervising company M applies a coupon discount rate corresponding to the amount to be paid by the owner of the IC card 40, and sends the use data, testifying to the fact of application of the coupon, to the hysteresis management device 23 of the system supervisor S. The hysteresis management device 23 updates the information on the unused coupon, correlated with the memory identification data MID of the IC card 40, to the used state.

Meanwhile, the second reader/writer 52 is unable to access the membership data area 42 of the second IC card 40b, because there lacks the economic or organizational relationship with the hotel H. If conversely the first reader/writer 35 and the second reader/writer 52 belong to economically or organizationally the same business entity and have access rights to the first IC card 40a, the second reader/writer 52 is able to access the first hysteresis data HD1 concerning the owner of the first IC card 40a, for instance.

If goods are purchased by the first reader/writer 35 of the display terminal device 32a, 32b or 32c, installed in the hotel H, and/or by the second reader/writer 52 of the store terminal device 51, installed in the store A handling the IC card 40, the display terminal device 32a, 32b or 32c or the store terminal device 51 accesses the IC card management device 61 controlled by the company M supervising the IC card, as shown in Fig. 8,

The IC card management device 61 has a constitution similar to that of a usual computer. Thus, the editing device includes a hard disc, a ROM, a RAM, a CPU, a display device, such as LCD or CRT, an inputting device, such as a keyboard or a mouse, an input/output I/F for an external storage device, such as optical disc, and a communication I/F for communication over a network, such as the Internet, for instance. The IC card management device 61 is a device that supervises the electronic money area 41 of the first and second IC cards 40a, 40b. The IC card management device 61 supervises the memory identification data MID, transmitted from the communication I/F 36 of the display terminal device 32a, 32b or 32c or from the store terminal device 51 over a network. The hysteresis management device 23, controlled by the system supervisor S, receives and authenticates the first hysteresis data HD 1, for instance. The hysteresis management device 23 also supervises, in a database provided in a hard disc, the first hysteresis data HD 1 and the memory identification data MID for instance, as the hysteresis management device correlates the first hysteresis data HD 1 and the memory identification data MID with each other. These two data have been received from the IC card management device 61, controlled by the IC card supervising company M, via a portable recording medium or over an encrypted secure communication network. When the user has acquired the coupon data CD, using the first IC card 40a not having the coupon area 43, the hysteresis management device 23 supervises the coupon data CD in association with the memory identification data MID, because the coupon data CD cannot be stored in the first IC card 40a.

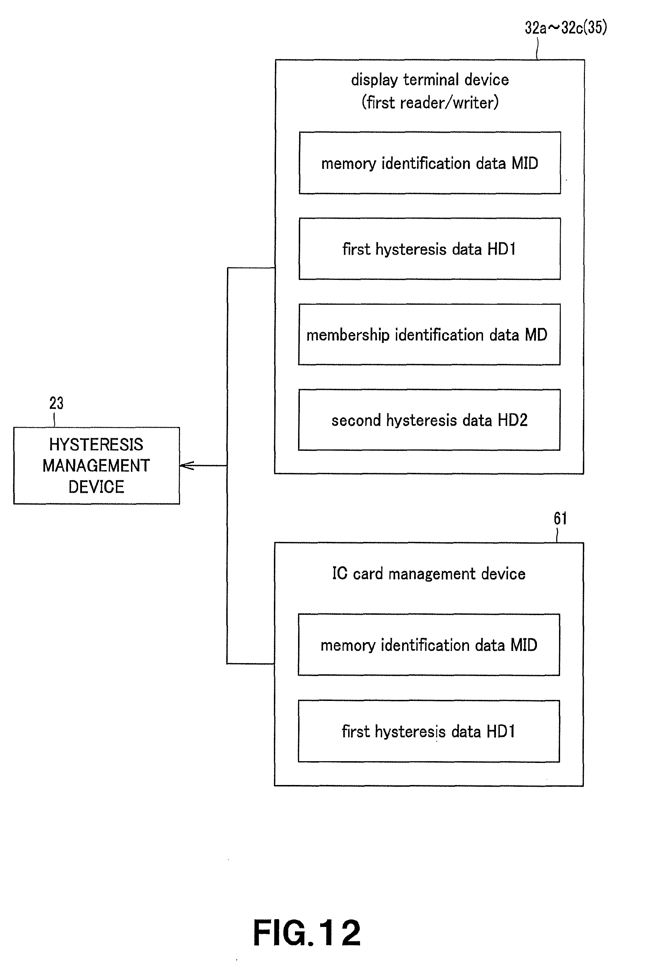

In the hysteresis management device 23 in the electronic advertisement system 100, there are stored the memory identification data MID, first hysteresis data HD1, membership identification data MD and the second hysteresis data HD2, acquired in the first reader/writer 35 of the display terminal device 32a, 32b or 32c, installed in the hotel H, as shown in Fig.12. In addition, the memory identification data MID and the first hysteresis data HD 1 are stored in the hysteresis management device, as hysteresis data concerning purchase hysteresis of goods managed by the IC card management device 61. The so stored data are transmitted to the hysteresis analysis device 24 over a network or via a portable recording medium.

The hysteresis analysis device 24 has a constitution similar to that of a usual computer. Thus, the editing device includes a hard disc, a ROM, a RAM, a CPU, a display device, such as LCD or CRT, an inputting device, such as a keyboard or a mouse, an input/output I/F for an external storage device, such as optical disc, and a communication I/F for communication over a network, such as the Internet, for instance. The hysteresis analysis device 24 extracts the first hysteresis data HD1, associated with memory identification data MID, supervised by an IC card management device 61, which hysteresis data coincide with the memory identification data MID acquired by the display terminal device 32a, 32b or 32c provided in the hotel H.

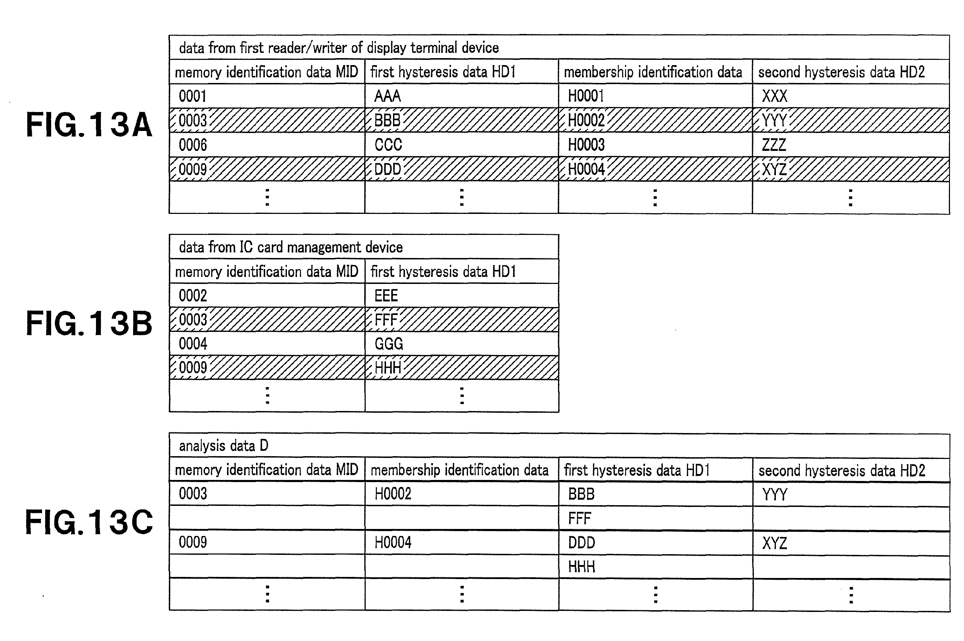

Reference is made to Figs. 13A to 13C for explanation. Fig. 13A shows the memory identification data MID, first hysteresis data HD1, membership identification data MD and the second hysteresis data HD2 from the first reader/writer 35 of the display terminal device 32a, 32b or 32c installed in the hotel H. Fig.13B shows the memory identification data MID and the first hysteresis data HD1, managed by the IC card management device 61. The memory identification data MID [0003] and [0009] from the first reader/writer 35 of Fig. 13A coincides with the memory identification data MID from the IC card management device 61 of Fig. 13B. Thus, the hysteresis analysis device 24 extracts the first hysteresis data HD1 ([BBB] and [FFF]) of the memory identification data MID [0003], membership identification data MD ([H0002]) and the second hysteresis data HD2 ([YYY]), which are coincident data, as shown in Fig.13C, to generate analysis data D. The hysteresis analysis device also extracts the first hysteresis data HD1 ([DDD] and [HHH]) of the memory identification data MID [0009], membership identification data MD ([H0004]) and the second hysteresis data HD2 ([XYZ]), which are coincident data, as shown in Fig. 13C, to process and generate the analysis data D. The analysis data D are generated in accordance with the CSV (Comma Separated value) or the HTML (Hyper Text Markup Language) format.

The analysis data D, thus generated by the hysteresis analysis device 24, is delivered to a hotel side supervising device 39, controlled by the hotel H, over a network or via a portable recording medium, as shown in Fig. 8. This hotel side supervising device 39 has a constitution similar to that of a usual computer. Thus, the editing device includes a hard disc, a ROM, a RAM, a CPU, a display device, such as LCD or CRT, an inputting device, such as a keyboard or a mouse, an input/output I/F for an external storage device, such as optical disc, and a communication I/F for communication over a network, such as the Internet, for instance. The hotel side supervising device 39, thus supplied with the analysis data from the hysteresis analysis device 24, browses the analysis data D and further analyzes the data to analyze the behavior pattern of the users of the hotel H.

With the analysis data D, shown in Fig.13C, it is possible for the hotel H to acquire the private information, such as users' names, age or the addresses, from the membership identification data MD [H002] associated with the memory identification data MID [0003], and to learn in which of the edited advertisement data ED the users are interested, from the second hysteresis data HD2 [YYY], and how far is the store from the hotel H the users visited and which goods the users purchased in the store, from the first hysteresis data [BBB] and [FFF]. This may allow the hotel H to determine the contents of the relevant data RD to be generated by the hotel H or the contents of the second and third advertisement data AD2 and AD3 to be included in the edited advertisement data ED. That is, the hotel H may learn from the analysis data D the behavior pattern of the users and, more specifically, the users who used the display terminal devices 32a to 32c as specified by the place identification data PID.

In the above embodiment, the advertisers B and C are within 500m around the hotel H. If, however, the users' presupposed behavior sphere is broader, it is possible to select the advertisers from a broader territory.

The sequence of operations with the above-described electronic advertisement system 1 will now be described. Initially, the sequence of operations as from generation of the edited advertisement data ED until distribution thereof to the display terminal devices 32a to 32c will be described.

First, in the first to third advertisement inputting devices 10a to 10c, preset first to third advertisement data AD 1 to AD3 are generated responsive to the operations by the advertisers A to C. Specifically, the advertiser A is a leading advertising agency, and here generates first advertisement data AD 1, irrelevant to a preset territory, such as a territory 500m around the hotel H, by the first advertisement inputting device 10a. The first advertisement inputting device 10a is responsive to operations by the advertiser A to generate advertisement data of a preset beer maker, for instance. Specifically, the first advertisement inputting device 10a generates data for distribution conditions, such as display time duration (e.g. 15 or 30 seconds) supplied from the display terminal devices 32a to 32c, time zones, the number of times of looping or display time periods, responsive to operations by the advertiser A. These data are generated in addition to data of the HTML format, directly constituting the first advertisement data AD1, such as moving picture files or still image files.

On the other hand, the advertisers B and C are masters of stores within a preset territory such as a territory within 500m around the hotel H, and generate images of goods handled by the stores or coupon data CD by the second and third advertisement inputting devices 10b and 10c. Specifically, the second and third advertisement inputting devices 10b and 10c generate data of the HTML or CHTML (Compact HTML) formats, constituting the second and third advertisement data AD2 or AD3, responsive to the operations by the advertisers A or C. These data may be exemplified by data for store names, moving picture files, still image files, store names, addresses, telephone numbers or discount rates of the coupon data. The first to third advertisement inputting devices 10a to 10c deliver these data to the editing device 21 of the system supervisor S over a network or via a portable recording medium, as shown in Fig.8.

The hotel side inputting device 31, controlled by the hotel H, is responsive to the operations by a staff member of the hotel H to generate the hotel relevant data RD for the users, such as guests lodging in the hotel. These hotel relevant data include data on weather, near-by facilities, state of operations of means of transportation, utensils provided in the guest rooms, or promotion of sample products. The hotel side inputting device 31 transmits these data to the editing device 21 of the system supervisor S, over a network or via a portable recording medium, as shown in Fig.8.

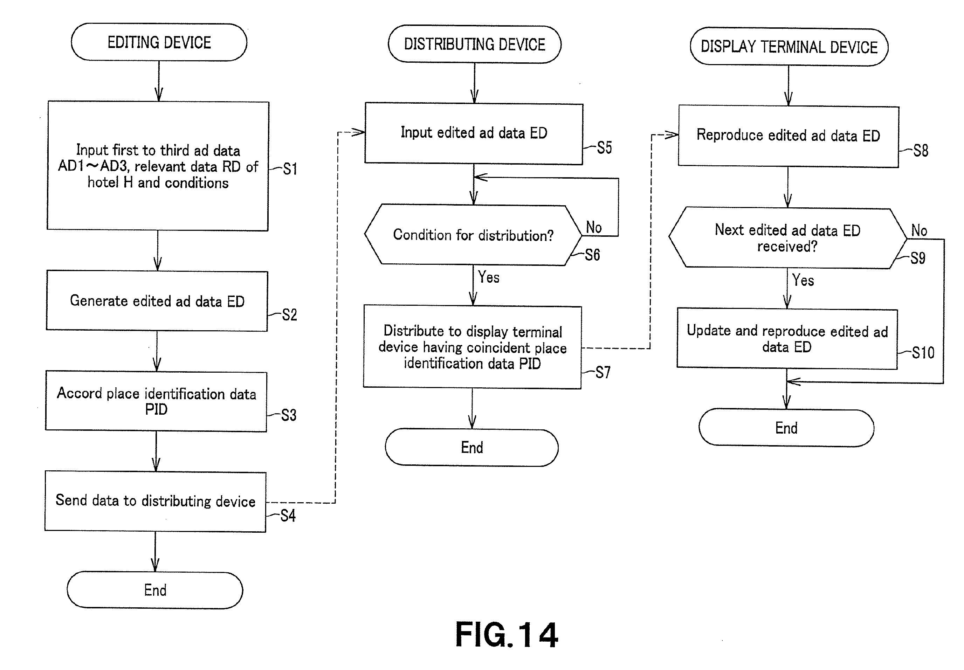

The first to third advertisement data AD1 to AD3 from the first to third advertisement inputting devices 10a to 10c and the hotel relevant data RD from the hotel side inputting device 31 are supplied in a step S 1 to the editing device 21, controlled by the system supervisor S, as shown in Fig.14. The editing device 21 edits the first to third advertisement data AD 1 to AD3 and the hotel relevant data RD, in a step S2, to generate the edited advertisement data ED. The so generated edited advertisement data ED are displayed in three sub-divided portions of a viewing screen, or at least one advertisement data is displayed superposed on other advertisement data. Further, the first to third advertisement data AD 1 to AD3 are of the hierarchical structure, such that, in case one advertisement data is selected, further detailed sub-layer advertisement data are demonstrated.

In a step S3, the editing device 21 accords the place identification data PID, allocated to the display terminal devices 32a to 32c of the hotel H, to the edited advertisement data ED. In a step S4, the editing device 21 transmits the edited advertisement data ED, including the place identification data PID, to the distributing device 22, over a network or via a portable recording medium.

The distributing device 22, supplied in a step S5 with the edited advertisement data ED, having the place identification data PID appended thereto, judges in a step S6 whether or not the distribution condition for the edited advertisement data ED, for example, the time being the time for distribution, has been met. When the distribution condition has been met, the distributing device 22 in a step S7 accesses the database, and distributes the edited advertisement data, over a network, to address data of the display terminal devices 32a to 32c coincident with the place identification data PID appended to the input edited advertisement data ED.

In a step S8, the display terminal device 32a, 32b or 32c, installed in the hotel H, sequentially reproduces the edited advertisement data ED, transmitted from the distributing device 22, to display the so reproduced data on the display operating unit 33. In a step S9, the display terminal device 32a, 32b or 32b judges whether or not the device has received the next or new edited advertisement data ED, transmitted from the distributing device 22. When the next or new edited advertisement data ED has been received, the display terminal device in a step S10 sequentially reproduces the next or new edited advertisement data ED.

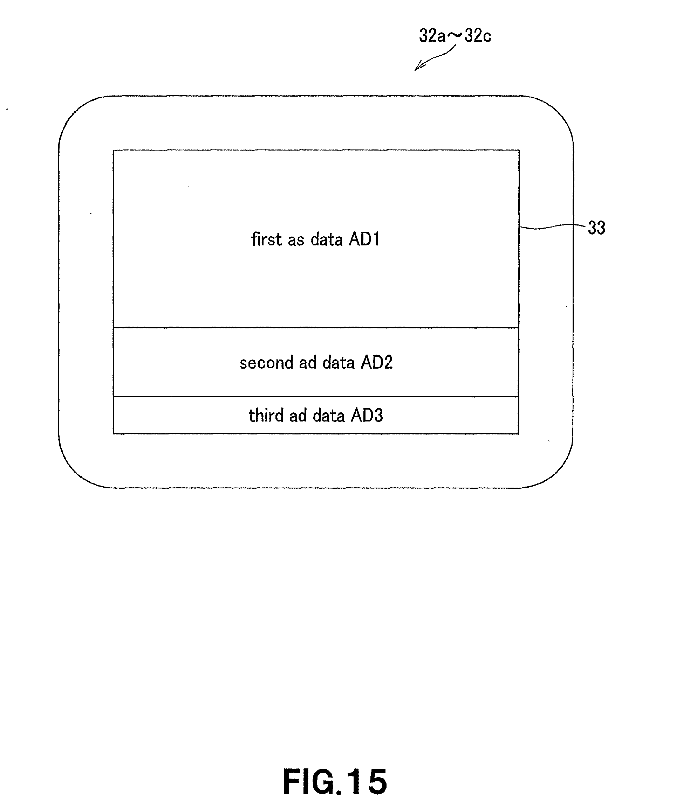

On the display operating unit 33 in each of the display terminal devices 32a to 32c, the first to third advertisement data AD 1 to AD3 are demonstrated in three subdivided portions of the picture image, as shown for example in Fig.15. In the example of Fig.15, the first advertisement data AD 1 is displayed with the largest size on an uppermost portion, the second advertisement data AD1 is displayed with the next largest size on a mid portion and the third advertisement data AD1 is displayed in a lower portion. Meanwhile, the display areas or locations of the first to third advertisement data AD1 to AD3 on the display operating unit 33 are not limited to those of the example of Fig.15. Thus, the advertisement data, desired to be emphasized, may be demonstrated with the largest size or in a center portion of the picture image on the display screen, in order to attract the users' attention. One or more advertisement data may also be displayed superimposed on the other advertisement data. Thus, the edited advertisement data ED, shown in Fig. 15, may be demonstrated on the display operating unit 33 of the display terminal device 32a, 32b or 32c, installed in the hotel H, to have the users of the hotel H in the guest room or in a lobby view the edited advertisement data ED. Since the advertisement data AD2 or AD3 of the second advertiser B or C in the neighboring territory of the hotel H is included in the edited advertisement data ED, it is possible for the hotel H to supply the users, such as guests, with the information of the near-by stores.

In the above-described embodiment, the edited advertisement data ED is directly supplied from the distributing device 22 to the display terminal devices 30a to 32c. It is however also possible to install a hotel side server, as a proxy server, a place identification data PID is allocated to, and to provide this hotel side server with the edited advertisement data ED from the distributing device 22. In this case, the hotel side server, which has received the edited advertisement data ED, further transmits the data to the display terminal devices 32a to 32c provided in the hotel H. To furnish fine-textured information, suited to each guest, the hotel side server may add the information on the stores or goods, suited to each guest room, to distribute the resulting data to the display terminal device 32a, 32b or 32c in the guest room.

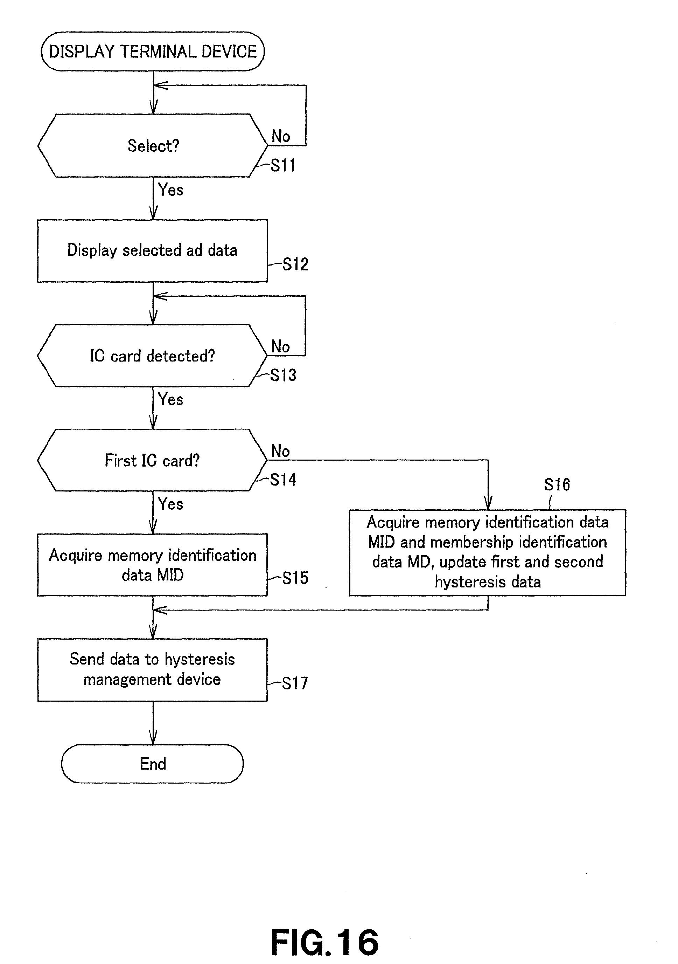

The sequence of operations in case the display terminal device 32a, 32b or 32c has been acted on by the user will now be described with reference to Fig. 16.

In a step S11, the display terminal device 32a, 32b or 32c judges which of the first to third advertisement data AD 1 to AD3 on a picture image shown in Fig.15 has been selected. In the next step S12, the display terminal device 32a, 32b or 32c demonstrates the first advertisement data AD1, second advertisement data AD2 or the third advertisement data AD3, as selected, on the display operating unit 33. Since the first to third advertisement data AD1 to AD3 are of the hierarchical structure, described above, advertisement data of sequentially lower layers may be demonstrated on the display terminal device 32a, 32b or 32c, in case the user performs the operation of selecting progressively lower layers of the advertisement data. Each time the advertisement data is displayed, the display terminal device 32a, 32b or 32c records log data, such as address data or date/time data of the add data, on a hard disc, for instance.

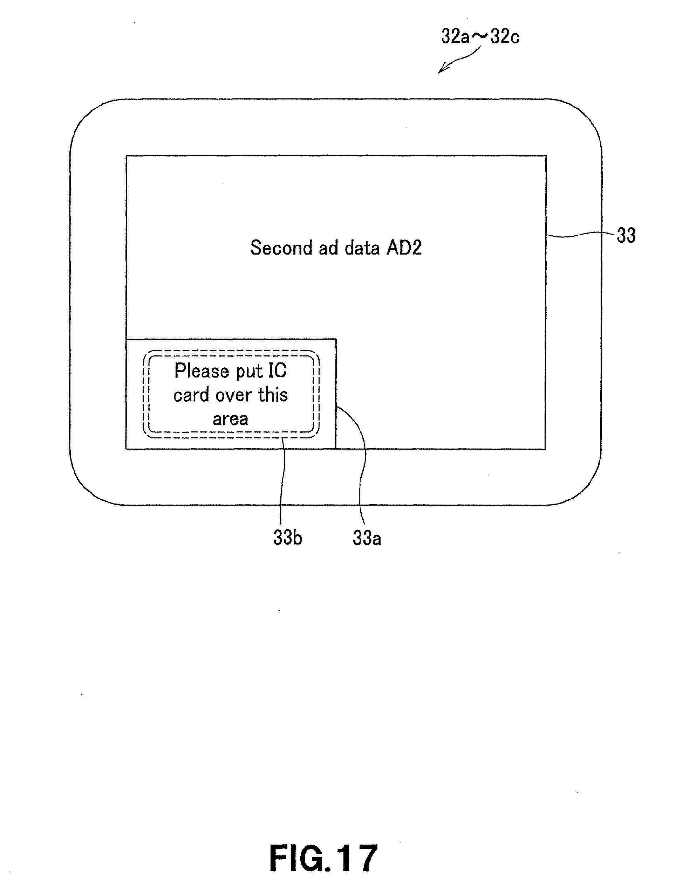

The display terminal device 32a, 32b or 32c then proceeds to a lower layer data of the second advertisement data AD2, for instance, to display a picture image in need of the IC card 40. A card area 33a, over which to put the IC card 40, is displayed on the picture image in need of the IC card 40, as shown in Fig.17. This card area 33a is displayed in register with a portion on the surface of the display operating unit 33 provided with an antenna coil 33b designed to communicate with the IC card 40. In a step S 13, the display terminal devices 32a to 32c judge whether or not the first reader/writer 35 has been magnetically coupled by magnetic induction with the IC card 40 to verify whether or not the IC card 40 has been placed on the card area.

It should be noted that, even if the antenna coil 33b is not in register with the card area 33a, the display terminal device 32a, 32b or 32c judges, by its first reader/writer 35, whether or not the IC card 40 has been placed on the card area, depending on whether or not the antenna coil 33b in the card area 33a has been magnetically coupled by magnetic induction with the IC card 40.

In a step S14, the display terminal device 32a, 32b or 32c judges whether or not the IC card 40, communicating with the first reader/writer 35, is the first IC card 40a, in order to check the sort of the IC card 40. This results because the first IC card 40a is not provided with the membership identification data MD, as shown in Fig. 11. In this case, the display terminal device 32a, 32b or 32c reads out the identification data, representing the sort of the IC card 40, by the first reader/writer 35, in order to check the sort of the IC card 40. This sort check is carried out by the first reader/writer 35 referencing the sort identification data, allocated to the first IC card 40a and the second IC card 40b.

If the IC card, as a counterpart of communication, is the first IC card 40a, the first reader/writer 35 of the display terminal device 32a, 32b or 32c reads out and acquires the memory identification data MID of the electronic money area 41. If the IC card, as a counterpart of communication, is the second IC card 40b, the first reader/writer 35 of the display terminal device 32a, 32b or 32c reads out and acquires the memory identification data MID of the electronic money area 41 and the membership identification data MD of the membership data area 42.

In a step S 17, the display terminal device 32a, 32b or 32c sends hysteresis data of the IC card 40 over the network to the hysteresis management device 23. Specifically, in case the IC card 40 is the first IC card 40a, the display terminal device 32a, 32b or 32c transmits the memory identification data MID of the electronic money area 41 to the hysteresis management device 23. At this time, the display terminal device 32a, 32b or 32c may transmit address data of advertisement data, displayed and also recorded as log, to the hysteresis management device 23, as the address data is correlated with the memory identification data MID. This renders it possible to generate the analysis data D which is anonymous data but which is correlated with the memory identification data MID. In case the IC card 40 is the second IC card 40b, the display terminal device 32a, 32b or 32c transmits the memory identification data MID of the electronic money area 41, the membership identification data MD of the membership data area 42 and address data of the advertisement data, displayed and also recorded as log by way of the second hysteresis data HD2, to the hysteresis management device 23. In this manner, the hysteresis of user access to the display terminal device 32a, 32b or 32c is accumulated in the hysteresis management device 23.

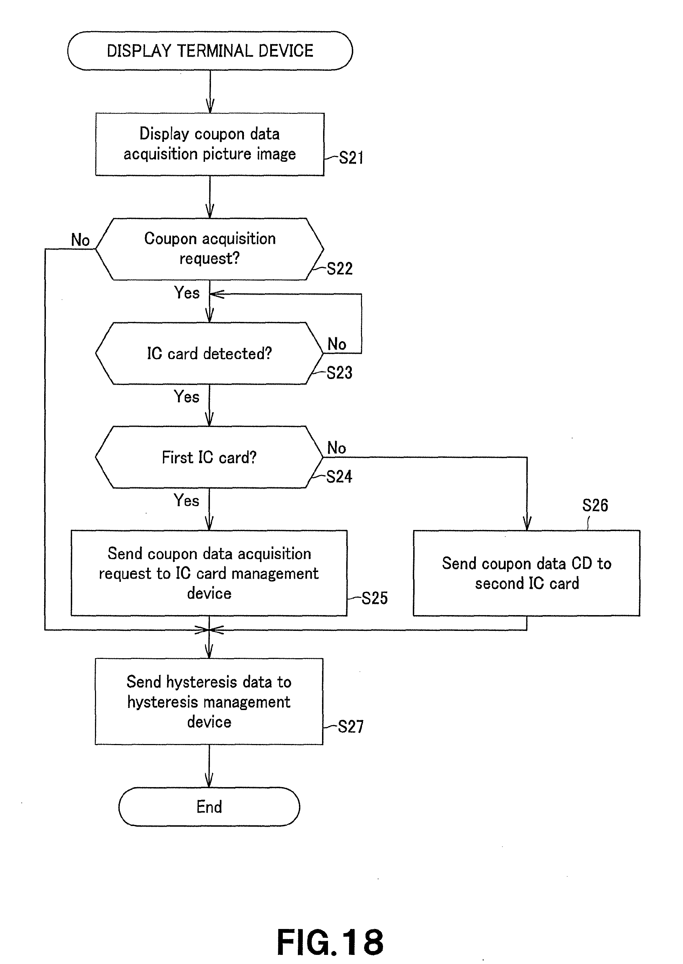

The sequence of operations until the user acquires coupon data CD in the display terminal device 32a, 32b or 32c is now described with reference to Fig. 18.

The display terminal device 32a, 32b or 32c demonstrates, responsive to the user's actuation, a picture image for acquiring the coupon data CD at a lower-layer page of the second advertisement data AD2 or the third advertisement data AD3.

The picture image for acquiring the coupon data CD, demonstrated on the display operating unit 33 of the display terminal device 32a, 32b or 32c, is similar to a picture image for communication with the IC card 40, shown in Fig.17. That is, the card area 33a is displayed in register with an area of the antenna coil 33b on the surface of the display operating unit 33 used for communicating with the IC card 40. In a step S22, the display terminal device 32a, 32b or 32c judges whether or not an operation for requesting the acquisition of the coupon data has been carried out. When this operation has been carried out, the first reader/writer 35 of the display terminal device 32a, 32b or 32c in a step S23 judges whether or not the antenna coil has been magnetically coupled with the IC card 40, in order to verify whether or not the IC card 40 has been placed over the card area.

On detection of the IC card 40, the display terminal device 32a, 32b or 32c in a step S24 checks whether or not the IC card 40, the first reader/writer 35 communicates with, is the first IC card 40a. That is, the display terminal device checks the sort of the IC card 40. This results because the IC card 40 does not have the storage area in which to store the coupon data CD. This sort check is carried out by the first reader/writer 35 referencing the sort identification data allocated to the first IC card 40a and the second IC card 40b.

When the IC card, the display terminal device 32a, 32b or 32c communicates with, is the first IC card 40a, the first reader/writer 35 of the display terminal device 32a, 32b or 32c reads out and acquires the memory identification data MID of the electronic money area 41. The display terminal device also transmits a request for acquisition of the coupon data CD to the IC card management device 61. This results because the first IC card 40a does not have the area in which to store the coupon data CD such that control must be managed by the IC card management device 61. This IC card management device 61 manages the request for acquisition of the coupon data CD by a database in association with the memory identification data MID. Thus, the user owning the first IC card 40a and the user owning the second IC card 40b may at any time use the coupon data CD at a store A handling the IC card 40. The hysteresis management device 23 supervises the issuing state of the coupon data CD, no matter whether the coupon data has been issued based on the first IC card 40a or the second IC card 40b.

When the IC card, the display terminal device 32a, 32b or 32c communicates with, is the second IC card 40b, the display terminal device in a step S26 transmits the coupon data CD to the second IC card 40b. The coupon data CD, transmitted from the display terminal device 32a, 32b or 32c, is stored in the coupon area 43 of the memory device of the second IC card 40b.

In a step S27, as in the step S17 of Fig. 16, the display terminal device 32a, 32b or 32c transmits hysteresis data of the IC card 40 to the hysteresis management device 23, in order to control the use hysteresis of the IC card 40, over the network.

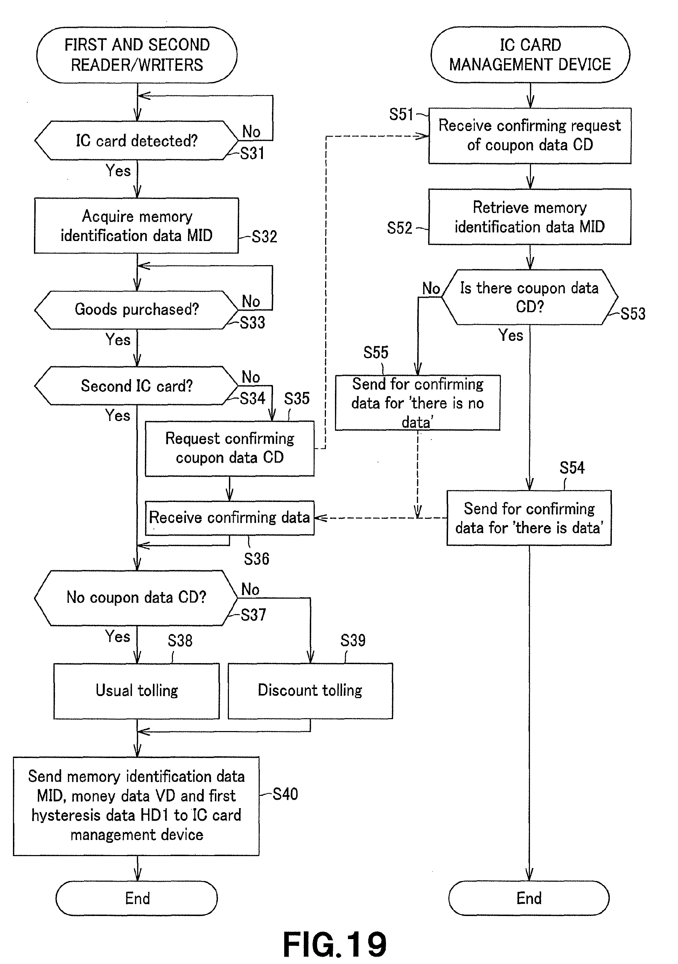

The sequence of operations for the user to purchase goods with the IC card 40 will now be described with reference to Fig. 19.

The first reader/writer 35 of the display terminal device 32a, 32b or 32c and the second reader/writer 52 of the store terminal device 51 of the store A handling the IC card 40 judges, in a step S31, whether or not the an antenna coil has been magnetically coupled with the IC card 40 by magnetic induction, such as to verify whether or not the IC card 40 has been put over the card area. In a step S32, the first and second reader/writers 35, 52 read out and acquire the memory identification data MID of the electronic money area 41 of the IC card 40. The first reader/writer 35 and the second reader/writer 52 in a step S33 judges whether or not goods have been purchased by the user or the store staff member.

When the operation for purchasing the goods has been done, the first and second reader/writers 35, 52 verify in a step S34 whether or not the IC card 40 used for communication is the second IC card 40b. That is, the first and second reader/writers verify the card sort. It is because the second IC card 40b has a coupon area 43 in which to store the coupon data CD, whereas the first IC card 40a does not have the coupon area 43. This sort check is done by the first reader/writer 35 referencing sort identification data allocated to the first IC card 40a and to the second IC card 40b.

In case the IC card 40, used for communication, is the first IC card 40a not having the coupon area 43, the first and second reader/writers 35, 52 in a step S35 transmits confirmation request data, along with the memory identification data MID, to the IC card management device 61, in order to confirm the presence or absence of the coupon data CD controlled by the IC card management device 61. On receipt in a step S51 of the confirmation request data for the coupon data CD, sent along with the memory identification data MID from the first and second reader/writers 35, 52, the IC card management device 61 in a step S52 accesses the database to retrieve the memory identification data MID which is the same as the received memory identification data MID.

If there is the memory identification data MID which is the same as the received memory identification data MID, the IC card management device 61 judges in a step S53 whether or not the coupon data CD is correlated with the memory identification data MID. If there is the coupon data CD, the IC card management device 61 in a step S54 transmits to the first and second reader/writers 35, 52 confirmation data that there is the coupon data CD. When transmitting the confirmation data that there is the coupon data CD, the IC card management device 61 simultaneously transmits the contents of the coupon data CD to the first and second reader/writers 35, 52.

When there is no coupon data, the IC card management device 61 in a step S54 transmits confirmation data that there is no coupon data CD to the first and second reader/writers 35, 52. In a step S36, the first and second reader/writers 35, 52 receive confirmation data from the IC card management device 61 stating that there is coupon data CD or there is no coupon data CD.

In a step S37, the first and second reader/writers 35, 52 judge whether or not there is coupon data. That is, in case the IC card is the second IC card 40b having the coupon area, the first and second reader/writers 35, 52 access the coupon area 43 of the second IC card 40b to verify whether or not there is coupon data CD. In case the IC card is the first IC card 40a, not having the coupon area 43, the first and second reader/writers 35, 52 judge whether or not there is coupon data, based on the confirmation data transmitted from the IC card management device 61.

When there is no coupon data CD, the first and second reader/writers 35, 52 in a step S38 carries out usual tolling, without privileges, such as discounts. That is, the first and second reader/writers access the electronic money area 41 of the IC card 40 to subtract value data equivalent to the price of the goods purchased. Simultaneously, the first and second reader/writers update the first hysteresis data HD 1. When there is the coupon data CD, the first and second reader/writers 35, 52 perform tolling with privileges, such as discounts. That is, the first and second reader/writers 35, 52 access the electronic money area 41 of the IC card 40 to subtract value data equivalent to the price of the goods purchased less the discount value. Simultaneously, the first and second reader/writers update the first hysteresis data HD1. The first and second reader/writers also add points which are in keeping with the coupon data CD.

In a step S40, the first and second reader/writers 35, 52 transmit the first hysteresis data HD1, correlated with the memory identification data MID, to the IC card management device 61. Thus, the IC card management device 61 is able to store the first hysteresis data HD 1 in association with the memory identification data MID. Meanwhile, when communicating with the second IC card 40b, the first and second reader/writers 35, 52 may transmit the membership identification data MD of the membership data area 42 or the second hysteresis data HD2 to the hysteresis analysis device 24, which hysteresis analysis device 24 may then control these data.

Meanwhile, the system supervisor S is supervising the issuing states of the coupon data CD for both the first IC card 40a and the second IC card 40b, that is, requests for acquisition of the coupon data CD, in the hysteresis management device 23. When the user purchases goods from the first and second reader/writers 35, 52, the hysteresis management device 23, controlled by the system supervisor S through the IC card management device 61, controlled by the IC card supervising company M, may collate the coupon data CD to authenticate the coupon data CD. When the coupon data CD has been authenticated, the hysteresis management device 23 transmits the result of the authentication to the IC card management device 61. This IC card management device and the first and second reader/writers 35, 52 then proceed to tolling as the contents of the coupon data CD are reflected in the tolling.

In case the reader/writer 35 of the display terminal device 32a, 32b or 32c is connected over the network with only the hysteresis management device 23, controlled by the system supervisor S, and goods have been purchased on the network, it is possible to transmit data concerning the purchase through the hysteresis management device 23 to the IC card management device 61.

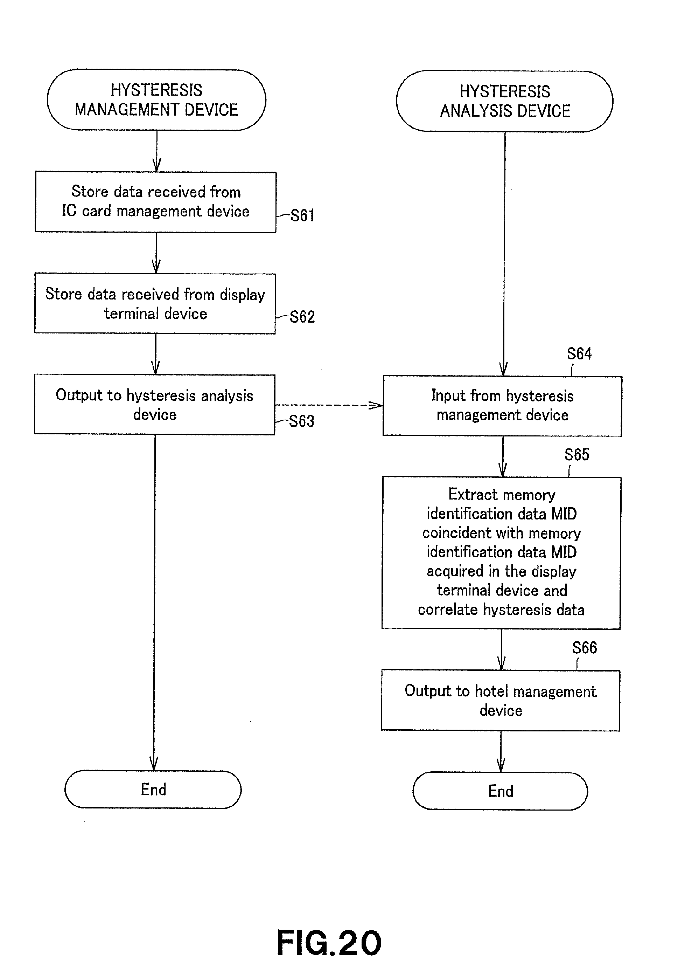

The sequence of operations until analysis by the hysteresis analysis device 24 will now be described with reference to Fig.20.

First, in a step S61, the hysteresis management device 23 receives hysteresis data from the display terminal device 32a, 32b or 32c. The so received input data are stored in the database. In more detail, the hysteresis management device 23 receives the memory identification data MID of the first IC card 40a, transmitted in the above step S 17 from the display terminal device 32a, 32b or 32c, address data of advertisement data, correlated with the memory identification data MID of the first IC card, memory identification data MID of the electronic money area 41 of the second IC card 40b, membership identification data MD of the membership data area 42, and the second hysteresis data HD2. In a step S62, hysteresis management device 23 receives the hysteresis data from the IC card management device 61. Specifically, the first hysteresis data HD 1, associated with the memory identification data MID controlled by the IC card management device 61 in the above step S40 is entered. Thus, all of hysteresis data of the first IC card 40a and the second IC card 40b are stored in the hysteresis management device 23. That is, the memory identification data MID and the first hysteresis data HD1, stored in the electronic money areas 41 of the first IC card 40a and the second IC card 40b, as well as the membership identification data MD and second hysteresis data HD2, stored in the membership data area 42 of the second IC card 40b, are stored in the hysteresis management device 23, as shown in Fig. 12.

After lapse of a preset time period, the hysteresis management device 23 in a step S63 outputs the stored data to the hysteresis analysis device 24. On receipt of the data from the hysteresis management device 23, in a step S64, the hysteresis analysis device 24 in a step S65 extracts the first hysteresis data HD1, associated with the memory identification data MID, which have been acquired by the store terminal device 51 in the store A, handling the IC cards, and which are coincident with the memory identification data MID acquired by the display terminal device 32a, 32b or 32c, installed in the hotel H. The hysteresis analysis device 24 then generates analysis data.

In the above example of Fig. 13, the memory identification data MID [0003] and [0009] from the display terminal device 32a, 32b or 32c coincide with the memory identification data MID from the IC card management device 23. Thus, the hysteresis analysis device 24 extracts the first hysteresis data HD1 ([BBB] and [FFF]), membership identification data MD ([H0002]) and the second hysteresis data HD2 ([YYY]), in connection with the coincident memory identification data MID [0003], to generate analysis data D. The hysteresis analysis device 24 also extracts the first hysteresis data HD1 ([DDD] and [HHH]), membership identification data MD ([H0004]) and the second hysteresis data HD2 ([XYZ]), in connection with the coincident memory identification data MID [0003], to process and generate the analysis data D.

In a step S66, the hysteresis analysis device 24 outputs the analysis data D to the hotel side supervising device 39. This hotel side supervising device 39 may then browse the analysis data to make further analysis in order to analyze the behavior pattern of the users of the hotel H.

For example, with the analysis data of Fig.13C, the hotel H may get the private information, such as names, age or addresses of the users, from the membership identification data MD [H002] correlated with the memory identification data MID [0003], and may also learn from the second hysteresis data HD2 [YYY] which of advertisements in the edited advertisement data ED has aroused the interest of the users. The hotel H may also know from the first hysteresis data HD1 ([BBB] and [FFF]) how far is the store from the hotel H the user visited to purchase goods and may accordingly determine the contents of the relevant data RD to be generated by the hotel H or the contents of the second advertisement data AD2 or the third advertisement data AD3 to be included in the edited advertisement data ED. That is, the hotel H may learn from the analysis data D the behavior pattern of the users of the hotel H, more specifically, the hotel users who used the display terminal devices 32a to 32c as specified by the place identification data PID. Although the advertisers B and C are within 500m around the hotel H, in the above description, the advertisers B and C may be selected from a broader territory if the sphere of the users' behavior is broader.

In the above description, the electronic advertisement system 100 for providing the hotel H with the analysis data D is taken as an example and the behavior pattern of the hotel users is to be learned. It is however possible to install a plural number of the display terminal devices 32a to 32c in a public place, such as a railroad station, and to provide analysis data D to the second advertiser C or the third advertiser C in the neighborhood of the railroad station. The second advertiser C or the third advertiser C may then learn the behavior hysteresis of the users of the display terminal devices 32a to 32c installed in the railroad station.

## Claims

1. An electronic advertisement system including
editing means for editing a plurality of advertisement data to generate edited advertisement data for distribution;
a distribution server having distribution means for distributing said edited advertisement data from said editing means over a network;
a first display device for making display based on said edited advertisement data distributed from said distribution server; and
a second display device for making display based on said edited advertisement data in synchronization with said first display device; wherein
said second display device includes readout/write means to read out from and/or write in a memory having user data stored therein; and
control means for exercising control to change display contents by said first display device based on said user data read out from said memory by said readout/write means.

2. The electronic advertisement system according to claim 1 wherein said control means of said second display device provides said distribution server with said user data read out from said memory by said readout/write means to exercise control to change display contents by said first display device based on said user data.

3. The electronic advertisement system according to claim 1 further comprising:
a display control device for receiving the edited advertisement data distributed from said distribution server to make synchronized display on said first and second display devices based on the edited advertisement data received; wherein
said control means of said second display device provides said display control device with user data read out from said memory by said readout/write means to exercise control to change display contents by said first display device based on said user data.

4. A display control method in an electronic advertisement system in which display based on edited advertisement data distributed from a distribution server is made in synchronism on a first display device and a second display device; said method comprising:
reading out memory identification data by readout/write means, adapted to read out from or write in a memory having user data stored therein, from said memory; said readout/write means being provided in said second display device; and
exercising control to change display contents by said first display device based on said user data read out from said memory.
